Europäisches Patentamt

European Patent Office

Office européen des brevets

(11) Veröffentlichungsnummer: **0 128 114**
**B1**

(12) **EUROPÄISCHE PATENTSCHRIFT**

(45) Veröffentlichungstag der Patentschrift: **17.10.90**

(21) Anmeldenummer: **84810134.1**

(22) Anmeldetag: **22.03.84**

(51) Int. Cl.⁵: **E 04 B 1/61,** E 04 B 2/08,
E 04 H 5/06

(54) **Plattenförmiges Bauelement mit einer Kupplungsvorrichtung und Verwendung desselben.**

(30) Priorität: **01.06.83 CH 3007/83**

(43) Veröffentlichungstag der Anmeldung:
**12.12.84 Patentblatt 84/50**

(45) Bekanntmachung des Hinweises auf die
Patenterteilung:
**17.10.90 Patentblatt 90/42**

(84) Benannte Vertragsstaaten:
**AT BE CH DE FR GB IT LI LU NL SE**

(56) Entgegenhaltungen:
**CH-A- 369 272**
**CH-A- 514 046**
**DE-A-3 106 119**
**US-A-1 514 081**

(73) Patentinhaber: **Poly-Bauelemente AG**
**Webereistrasse 47**
**CH-8134 Adliswil (CH)**

(72) Erfinder: **Brink, Heinz-Dieter**
**Oberfeldweg 153**
**CH-3322 Mattstetten (CH)**
Erfinder: **Witschi, Heinz**
**Am Luzerbach 9**
**CH-6043 Adligenswil (CH)**

(74) Vertreter: **White, William et al**
**PATENTANWALTS-BUREAU ISLER AG Postfach**
**6940 Walchestrasse 23**
**CH-8023 Zürich (CH)**

Courier Press, Leamington Spa, England.

**Beschreibung**

Die vorliegende Erfindung betrifft ein plattenförmiges Bauelement für eine Hohlraumbaute mit einer Kupplungsvorrichtung nach dem Oberbegriff des unabhängigen patentanspruchs 1 sowie eine Verwendung desselben nach dem Oberbegriff des Patentanspruches 6.

Bauelemente werden heute schon vielfach als Fertigteile hergestellt, die auf der Baustelle lediglich zusammenzusetzen und mittels Zementmörtels zu verbinden sind. So ist es beispielsweise aus der CH-A-514 046 bekannt, an plattenförmigen Bauelementen die Stirnseite mit Nut und Feder auszurüsten.

Diese können als Schwalbenschwanz-Verbindung ·hergestellt sein, so dass zwei aneinanderstossende Elemente ineinandergeschoben und damit ohne Mörtel miteinander verbunden werden können. Für die Bildung von Ecken sind besondere Eckelemente vorgesehen. Nachteilig an solchen Verbindungen ist, dass kein Sand oder Schmutz in die Nuten kommen darf, und dass das Ineinanderschieben genau geschehen muss, weil sonst die Bauteile verklemmen.

Beim Bau von Unterpflasterkästen bei Kabelverteilschränken werden bis heute vorgefertigte Betonplatten in die vorbereitete Baugrube eingesetzt und mittels Schrauben miteinander verbunden. Eine solche Betonplatte hat üblicherweise ein Gewicht von mehr als 100 kg, so dass es zum Versetzen eine maschinelle Kraft braucht.

Es ist deshalb eine Aufgabe der Erfindung, ein plattenförmiges Bauelement zu schaffen, mit dem zwei aneinanderstossende Platten durch einfaches Zusammenfügen zu einem Geviert zusammengesetzt werden können und bei dem keine Schraubverbindungen benötigt werden.

Erfindungsgemäss wird dies mit einem plattenförmigen Bauelement, das die Merkmale im kennzeichnenden Teil des unabhängigen Patentanspruchs 1 aufweist, erreicht. Eine besonders vorteilhafte Anwendung ist im unabhängigen Patentanspruch 6 gekennzeichnet.

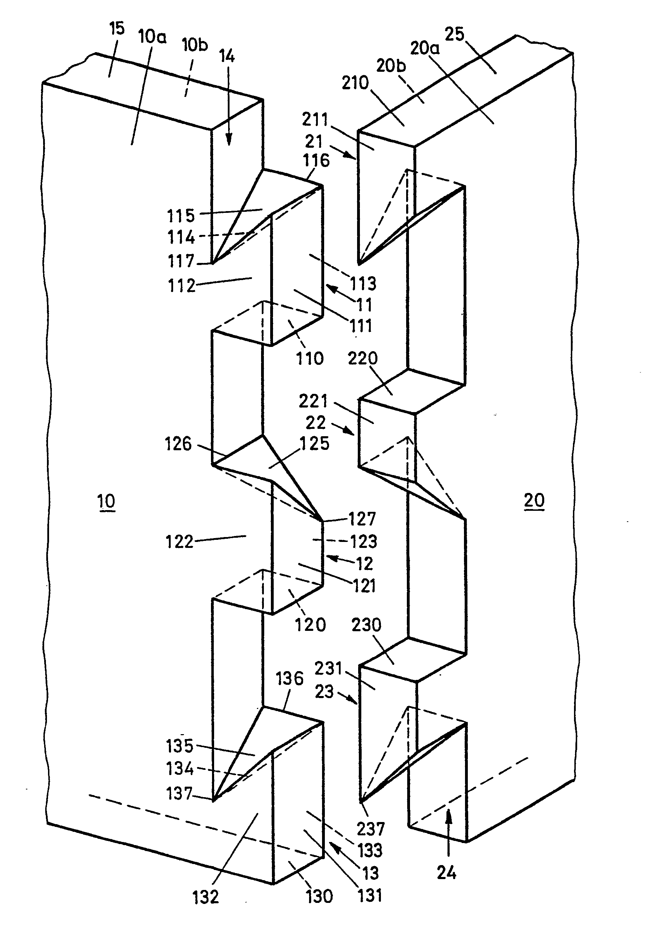

Ein Ausführungsbeispiel der Erfindung wird nachfolgend anhand der Zeichnung erläutert.

In der einzigen Figur sind die stirnseitigen Partien von zwei plattenförmigen Bauelementen 10, 20 dargestellt. Selbstverständlich könnten diese beiden dargestellten Partien auch die beiden Stirnseiten von ein und demselben Bauelement sein. Zum Verständnis der Funktionsweise dürfte jedoch die gewählte Darstellung dienlich sein.

In dieser Form zeigt sich das Bauelement 10 links in der Zeichnung als "Stehteil" und das Bauelement 20 als "Einhängeteil". Die Verbindungselemente sind als prismatische Zahnelemente 11, 12, 13 beim Bauelement 10 und als ebensolche Zahnelemente 21, 22, 23 beim Bauelement 20 ausgebildet, die an den Stirnseiten 14, 24 der Bauelemente 10, 20 einstückig aufgehängt sind.

Das Zahnelement 11 besteht aus einer ersten ebenen Fläche 110, die senkrecht auf der Stirnfläche 14 steht, einer zweiten ebenen Fläche 111, die parallel zur Stirnfläche 14 verläuft und den beiden Seitenflächenteilen 112, 113 als Verlängerungen der Seitenflächen des Bauelementes 10. Diese vier Flächen 110 — 113 stehen senkrecht aufeinander. Die obere Fläche ist durch zwei sich schneidende Ebenen gebildet, so dass zwei Deckflächenpartien 114, 115 entstehen, die eine konkave Vertiefung im prismatischen Zahnelement 11 bilden. Durch diese beiden Deckflächenpartien 114, 115 wird aus dem prismatischen Zahnelement 11 eine Partie ausgeschnitten, die als die eine Hälfte eines dreiseitigen Prismas betrachtet werden kann, wenn die Schnittfläche von einer Dreiecksspitze in beispielsweise der Grundfläche gegen die dieser Dreieckspitze gegenüberliegenden Dreiecksseite in der Deckfläche des Prismas verläuft.

Von dieser dreiseitigen Pyramide liegt die genannte Dreiecksseite 116 beim Zahnelement 11 in der hinteren Seitenwand 10b des Bauelementes und die Spitze 117 in der vorderen Seitenwand 10a, in der Stirnfläche 14 des Bauelementes.

Beim Zahnelement 12 sind dieselben ebenen Flächen zu erkennen, nämlich die untere, senkrecht auf der Stirnfläche 14 stehende Fläche 120, die parallel zur Stirnfläche 14 angeordnete Fläche 121 und die beiden Seitenflächen 122, 123 in der Ebene der Seitenflächen 10a, 10b des Bauelementes.

Von der ausgeschnittenen Pyramidenpartie liegt die Dreiecksseite 126 in der Stirnfläche 14 des Bauelementes und die Spitze 127 befindet sich in der Kante zwischen der hinteren Seitenfläche 123 und der zur Stirnfläche 14 parallelen Fläche 121.

Die beiden konkaven Vertiefungen verlaufen somit in benachbarten Zahnelementen 11, 12 gegengleich. Das dritte Zahnelement 13 ist wieder identisch ausgebildet wie das erste Zahnelement 11.

Die Zahnelemente 21, 22, 23 des zweiten Bauelementes 20 haben eine gegengleiche Ausbildung, das heisst, sie besitzen die bei den Zahnelementen 11, 12, 13 des ersten Bauelementes 10 ausgeschnittenen dreiseitigen prismen, so dass die entsprechenden Flächen formgleiche, konkave Erhöhungen darstellen.

Die Höhen der sechs dargestellten Zahnelemente 11, 12, 13 und 21, 22, 23 sind derart, dass bei zusammengesetzter Ecke die oberen Stirnflächen 15 und 25 miteinander fluchten. Damit muss beim Einhängen, wenn also die obere Fläche 230 am untersten Zahnelement 23 des Bauelementes 20 unter der Fläche 120 des mittleren Zahnelementes 12 des Bauelementes 10 eingeschoben wird, die tiefste Spitze 237 des Zahnelementes 23 über die Dreiecksseite 136 des Zahnelementes 13 schiebbar sein. Aus diesem Zusammenhang ergibt sich auch die jeweilige Höhe der Zahnelemente.

Für die eingangs erwähnte Anwendung bei einem Unterpflasterkasten haben Bauelemente, die aus Kunstharzbeton bestehen und 1 m lang und 60 cm hoch sind, ein Gewicht von rund 35 kg.

Damit kann ein Mann leicht einen solchen Unterpflasterkasten allein zusammenstellen. Es braucht weder Mörtel noch Schrauben, um den Kasten zusammenzuhalten. Ein weiterer Vorteil liegt auch im Transport. Wenn bisher ein solcher Kasten mit gleichen Abmessungen etwa 600 kg wog, hat ein Kasten mit den vorgeschlagenen Bauelementen nur noch ein Gewicht von 135 kg. Somit können bei gleichen Abmessungen viermal mehr Kastenelemente transportiert werden, was sich schliesslich in einer bedeutenden Zeitersparnis auswirken dürfte.

**Patentansprüche**

1. Plattenförmiges Bauelement (10, 20) für die Errichtung von Hohlraumbauten mit einer Kupplungsvorrichtung, um jeweils zwei an einer Ecke zusammenstossende Bauelemente ineinander einzuhängen, gekennzeichnet durch prismatisch ausgebildete, an den seitlichen Stirnflächen (14, 24) der Bauelemente (10, 20) abstehende Zahnelemente (11, 12, 13, 21, 22, 23), von denen die eine an die Stirnfläche anstossende Fläche (110, 120, 130, 210, 220, 230), eine parallel zur genannten Stirnfläche verlaufende Fläche (111, 121, 131, 211, 221, 231) und die verlängerten Seitenflächen (10a, 10b, 20a, 20b) der Bauelemente (10, 20) rechtwinklig aufeinanderstehen, und wobei ferner die fünfte freie Fläche an der genannten Stirnfläche (14) beim einen die Ecke bildenden Bauelement (10) eine konkave Vertiefung und beim anderen die Ecke bildenden Bauelemente (20) eine formgleiche konvexe Erhöhung bildet.

2. Bauelement nach Patentanspruch 1, dadurch gekennzeichnet, dass die konkave Vertiefung und die konvexe Erhöhung jeweils durch zwei sich schneidende Ebenen (114, 115) gebildet sind.

3. Bauelement nach Patentanspruch 2, dadurch gekennzeichnet, dass die beiden sich schneidenden Ebenen die Seitenflächen einer dreiseitigen Pyramide sind, die durch eine diagonal verlaufende Schnittfläche aus einem dreiseitigen Prisma entstanden ist.

4. Bauelement nach Patentanspruch 3, dadurch gekennzeichnet, dass die Spitzen der Pyramiden bei benachbarten Zahnelementen gegengleich angeordnet sind.

5. Bauelement nach einem der Patentansprüche 1 bis 4, dadurch gekennzeichnet, dass es aus Kunstharzbeton hergestellt ist.

6. Verwendung des Bauelementes nach Patentanspruch 1, als Seitenwände eines Unterpflasterkastens bei Kabelverteilschränken.

**Revendications**

1. Elément de construction en forme de dalle (10, 20) pour former une construction creuse, comprenant un dispositif d'assemblage permettant d'emboîter l'un dans l'autre deux éléments de construction respectifs qui sont en contact par un côté, caractérisé par des éléments de dents (11, 12, 13; 21, 22, 23) de constitution prismatique et faisant saillie sur les surfaces frontales latérales (14, 24) des éléments de construction (10, 20), dont les surfaces (110, 120, 130; 210, 220, 230) qui se raccordent à la surface frontale, les surfaces (11, 121, 131; 211, 221, 231) parallèles à la surface frontale mentionnée et les surfaces latérales prolongées (10a, 10b; 20a, 20b) des éléments de construction (10, 20) sont disposées à angle droit les unes par rapport aux autres, et où en outre la cinquième surface libre de la surface frontale (14) mentionnée forme un enfoncement concave pour un élément de construction (10) formant le bord et une saillie convexe de même forme pour l'autre élément de construction (20) formant le bord.

2. Elément de construction selon la revendication 1, caractérisé en ce que l'enfoncement concave et la saillie convexe sont respectivement formés par deux plans (114, 115) qui se coupent.

3. Elément de construction selon la revendication 2, caractérisé en ce que les deux plans qui se coupent constituent les surfaces latérales d'une pyramide à trois côtés qui est formée par une surface de coupe diagonale d'un prisme à trois côtés.

4. Elément de construction selon la revendication 3, caractérisé en ce que les pointes des pyramides d'éléments de dents voisins sont orientées en sens contraire.

5. Elément de construction selon l'une quelconque des revendications 1 à 4, caractérisé en ce qu'il est réalisé en béton à résine synthétique.

6. Utilisation de l'élément de construction selon la revendication 1, en tant que paroi latérale d'un coffrage en dalles enterré pour armoire de distribution de câbles.

**Claims**

1. A plate-like structural element (10, 20) for the erection of hollow constructions, with a coupling arrangement to assemble two structural elements into each other, which meet at a corner, characterized by tooth elements (11, 12, 13, 21, 22, 23) formed in the shape of prisms, standing out on the side front-faces (14, 24) of the structural elements (10, 20), the faces of which [tooth elements], one (110, 120, 130, 210, 220, 230) meeting on the front face, the other (111, 121, 131, 211, 221, 231) running parallel to the aforementioned front face, and the extended side faces (10a, 10b, 20a, 20b) of the structural elements (10, 20), stand at right-angles to each other, and wherein in addition the fifth free face on the aforementioned front face (14) forms a concave recess on one of the structural elements (10) which form the corner, and forms an identically-shaped convex elevated part on the other structural elements (20) which form the corner.

2. A structural element according to claim 1, characterized in that the concave recess and the convex elevated part are each formed by two intersecting planes (114, 115).

3. A structural element according to claim 2, characterized in that the two intersecting planes are the side faces of a three-sided pyramid, which has been formed from a three-sided prism by a diagonally cut face.

4. A structural element according to claim 3, characterized in that the apexes of the pyramids of adjacent tooth elements are arranged similar but opposite.

5. A structural element according to one of claims 1 to 4, characterized in that it is manufactured of synthetic resin concrete.

6. Use of the structural element according to claim 1, as the side walls of an underground case for cable-distribution boxes.